# EUROPÄISCHE PATENTSCHRIFT

(11) **EP 1 085 318 B1**
(45) Veröffentlichungstag und Bekanntmachung des Hinweises auf die Patenterteilung: **26.11.2003**
(21) Anmeldenummer: 00890272.8
(22) Anmeldetag: 05.09.2000
(51) Int. Cl.: G01N 27/333

(54) **Chloridsensitive Elektrodenmembran**
Membrane for chloride ion selective electrode
Membrane pour électrode sélective d'ions chlorures

(30) Priorität: 13.09.1999 AT 157199
(43) Veröffentlichungstag der Anmeldung: 21.03.2001
(73) Patentinhaber: F.HOFFMANN-LA ROCHE AG, 4070 Basel (CH)
(72) Erfinder: Ghahramani, Massoud Dr., 8102 Semriach Nr. 230/3 (AT); Offenbacher, Helmut, Dr., 8020 Graz (AT); Ritter, Christoph, Dr., 8045 Graz (AT)
(74) Vertreter: Babeluk, Michael, Dipl.-Ing. Mag.

(56) Entgegenhaltungen:
- EP-A- 0 289 753
- EP-A- 0 300 364
- EP-A- 1 020 722
- AT-B- 380 741
- CH-A- 679 526
- US-A- 4 629 744

## Beschreibung

Die Erfindung betrifft eine chloridsensitive Elektrodenmembran, welche eine Polymermatrix mit zumindest einer elektroaktiven Komponente aufweist, wobei die Polymermatrix ein Epoxidharz mit einer Aminverbindung als Härter enthält.

Derartige Membranen werden in chloridsensitiven Elektroden beispielsweise zur Bestimmung der Chloridkonzentration in wässrigen Medien eingesetzt.

Chloridelektroden spielen vor allem in der klinischen Chemie, insbesondere in der Diagnostik, eine bedeutende Rolle. Unter denjenigen Anionen, welche etwa in biologischen Flüssigkeiten routinemäßig analysiert werden, nimmt das Chlorid eine dominierende Position ein. Chlorid ist jenes Anion, das in der Extrazellulärflüssigkeit und damit auch im Blutserum in einer Konzentration von ca. 0,1 mol/l am stärksten vertreten ist.

Für das sensitive Element derartiger Membranelektroden sind eine Reihe von Ausführungsvarianten bekannt. Beispielsweise wurden Polypyrrolmembranen (Analyst, October 88/Vol 113, Seite 1525f), oder Metalloporphyrine als sensitive Komponente (Helv. Chim. Acta Vol 69, 1986, Seite 849f) vorgeschlagen. In der Praxis haben sich diese Verbindungen jedoch nicht durchgesetzt, so dass üblicherweise als chloridsensitive Elektroden elektrochemische Sensoren verwendet werden, deren sensitiver Teil im wesentlichen aus einer Mischung von PVC mit einem Ionentauscher und allfälligen weiteren Additiven besteht.

Das Problem bei allen diesen Elektrodenmembranen besteht darin, eine möglichst hohe Selektivität gegenüber Interferenten zu erreichen. In diesem Zusammenhang ist beispielsweise aus der EP 0 189 741 B1 bzw. AT 380 741 B eine ionensensitive, insbesondere chloridempfindliche, Membranelektrode bekannt geworden, bei welcher zumindest eine elektroaktive Komponente in einer weichmacherfreien Polymermatrix eingelagert ist. Der Anteil der elektroaktiven Komponente in der Membran ist sehr hoch und liegt im Bereich von 50-90 Gew.%, vorzugsweise 60-80 Gew.%. Die Polymermatrix besteht im wesentlichen aus PVC. Als elektroaktive Komponente wird beispielsweise Methyltridodecylammoniumchlorid verwendet. Mit einer derartigen Membranelektrode wird eine sehr hohe Chlorid-Selektivität erzielt, welche darauf beruht, dass extrem große Mengen an Ionentauscher eingesetzt werden. Das führt zu einer relativ hydrophilen Membran, wodurch (aufgrund der Gültigkeit der Hofmeisterreihe) für die in Blut bzw. Serum, Plasma oder Harn geltenden Bedingungen eine hohe Chlorid-Selektivität realisiert werden kann, so dass eine hervorragende Eignung für klinische Anwendungen gegeben ist. Allerdings haben derartige Membranelektroden einen wesentlichen Nachteil. Aufgrund der hohen Konzentration des Ionentauschers und der damit vorliegenden hohen Ladungsdichte in der Membran bilden sich rasch Ablagerungen, beispielsweise Proteinablagerungen, auf der Membranoberfläche. Dies führt dazu, dass die Membranelektrode im klinischen Betrieb nach jeweils ca. 70-100 Messungen von biologischen Ablagerungen gereinigt werden muss. Dies ist - speziell bei höherem Probendurchsatz - zeit- und kostenaufwendig.

In diesem Zusammenhang sei auf eine Elektrodenmembran verwiesen, deren Herstellung in der US 4,629,744 A beschrieben wird. Die Polymermatrix dieser Membran besteht aus einem Gemisch eines Epoxidharzes mit PVC in einem Verhältnis von 8:1 bis 1:2. Das Gemisch enthält weiters ein oder mehrere Lösungsmittel, bis zu 30 Gew.% eines quaternären Ammoniumsalzes als selektive Komponente, sowie einen Härter für das Epoxidharz. Das Gemisch wird in eine flache Schale gegeben, wo das bzw. die Lösungsmittel abdampfen und anschließend zur Formung einer Membran bei Temperaturen von 45° C für 20 Tage oder länger aushärten gelassen.

In der EP 0 289 753 A2, welche ebenfalls eine chloridsensitive Elektrodenmembran beschreibt und von einem Stand der Technik gemäß US 4,629,744 A ausgeht, wird vorgeschlagen, zur Verbesserung der Membraneigenschaften auf die Lösungsmittel zu verzichten und den relativen Anteil an PVC und quaternären Ammoniumsalzen zu erhöhen. Durch die neue Membrankomposition, welche 30 bis 50 Gew.% Epoxidharz mit Triethylentetramin als Härter, Polyvinylchlorid und bis zu 30 Gew.% eines quaternären Ammoniumsalzes verwendet, sollen die Nachteile der aus der US 4,629,744 bekannten Membran, insbesondere deren aufwendige Herstellung und deren beschränkte Lebensdauer, behoben werden.

Dies gelingt zum Teil mit der in der EP 0 289 753 beschriebenen Sensormembran, für welche eine verbesserte Lebensdauer von vier Monaten angegeben wird, innerhalb welcher allerdings die Steilheit des Sensors auf 70 % des Anfangswertes absinkt. Weiters ist bei der beschriebenen Membranzusammensetzung offenbar ein bestimmter Anteil an PVC in der Elektrodenmembran (gemäß Ausführungsbeispiel 32 Gew.%) unbedingt notwendig, um einen für die Messung anzustrebenden, niedrigen Membranwiderstand zu erreichen.

Ziel der vorliegenden Erfindung ist es, eine in der Herstellung einfache, chloridsensitive Elektrodenmembran vorzuschlagen, welche bei hoher Selektivität eine bedeutend verminderte Neigung zu biologischen Ablagerungen, insbesondere Proteinablagerungen, zeigt und im normalen Messbetrieb eine möglichst lange Standzeit bei unveränderter Steilheit der Kennlinie aufweist.

Erfindungsgemäß wird dieses Ziel dadurch erreicht, dass das Epoxidharz zumindest einen epoxidharzkompatiblen Flexibilisator aufweist, sowie dass der Anteil an Epoxidharz samt Flexibilisator an der Elektrodenmembran bei über 60 Gew.% und jener der elektroaktiven Komponente bei maximal 35 Gew.%, vorzugsweise bei maximal 30 Gew.%, liegt.

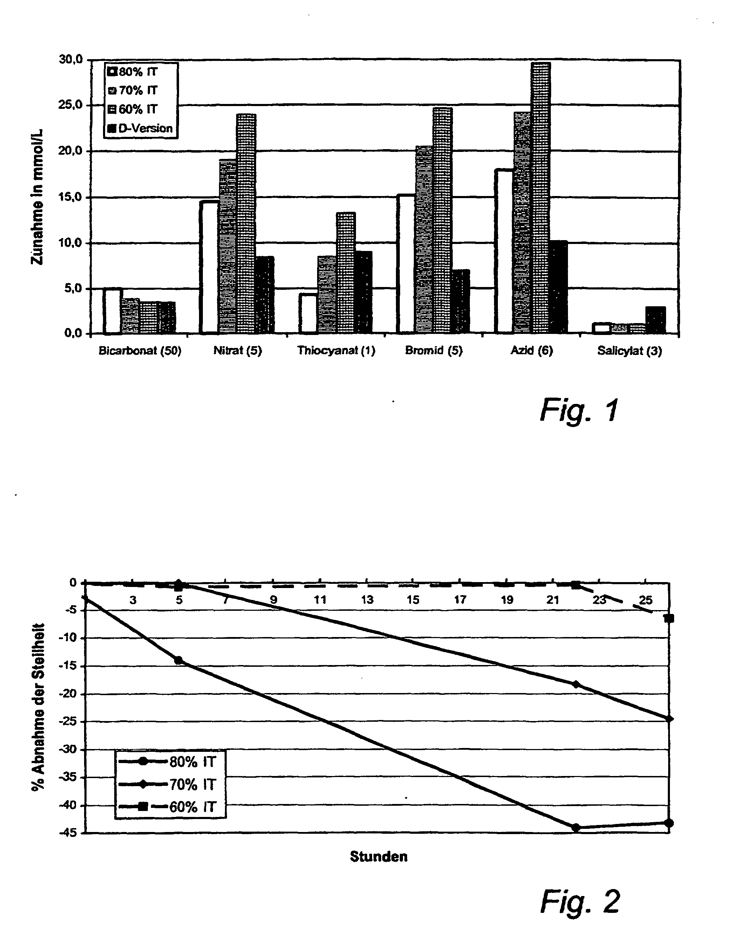

Die im Vergleich zur EP 0 189 741 B1 signifikante Reduktion des Anteiles der elektroaktiven Komponente auf maximal 30 bis 35 Gew.% bewirkt zunächst eine ebenfalls signifikante Reduzierung der Ladungsdichte, was die Verschmutzungsanfälligkeit, insbesondere die Neigung zur Proteinablagerung, entscheidend beeinflusst. Allein durch diese Maßnahme würde allerdings die Selektivität bei herkömmlichen PVC-Elektroden in unvorteilhafter Weise beeinflusst werden (siehe Fig. 1). Daher wird neben der sehr niedrigen Konzentration der elektroaktiven Komponente die PVC-Matrix zumindest großteils durch ein Epoxidharz mit einer Aminverbindung als Härter ersetzt, welche als elektroaktive Komponente wirkt.

Zum Unterschied zur EP 0 289 753 A2 wird hier allerdings ein Epoxidharz mit einem Flexibilisator eingesetzt und eine im Wesentlichen PVC - freie bzw. nur geringe PVC - Anteile (< 5 bis 10 Gew.%) enthaltende Elektrodenmembran verwendet. Es gibt Hinweise dass der Flexibilisator für die niedrigen Widerstandswerte verantwortlich ist, welche sich positiv auf die Standzeit bzw. die Lebensdauer der Membran im Messeinsatz auswirken.

Die Aminverbindung als Härter übernimmt dabei in der Elektrodenmembran eine dem Ionentauscher ähnliche Funktion. Überraschenderweise hat sich gezeigt, dass derartige Epoxidharze - entgegen den üblichen Erfahrungen mit anderen ionensensitiven Elektroden - für Chlorid bestens geeignet und sogar sehr vorteilhaft einzusetzen sind. Es können somit überraschenderweise chloridsensitive Membranelektroden realisiert werden, deren Selektivität mit herkömmlichen Sensoren durchaus vergleichbar ist, wobei sich im Bezug auf die Verschmutzung, Standzeit bzw. Stabilität der Kennlinie deutliche Verbesserungen zeigen.

Erfindungsgemäß ist beispielsweise vorgesehen, dass das Epoxidharz ≤ 50% Propylenglycoldiglycidyläther oder ≤ 50% Kresylglycidyläther als Flexibilisator aufweist.

In einer Weiterbildung der Erfindung kann ein Überschuss an Aminverbindung vorgesehen sein, welcher die für den Aushärtungsprozess nötige Konzentration um maximal 150 % übersteigt. Dabei ist zu beachten, dass das Epoxidharz auch nach der Aushärtung eine gewisse mechanische Flexibilität behält. Diese Flexibilität dient primär der Mobilität der am Messvorgang im potentiometrischen Sensor beteiligten Moleküle bzw. Ionen.

Zur weiteren Erhöhung der Selektivität der Elektrodenmembran kann die elektroaktive Komponente zumindest zum Teil aus einem Ionentauscher bestehen, so dass als selektive Komponente sowohl der Härter als auch der Ionentauscher zur Verfügung stehen. Die Summe der Konzentration beider Substanzen ist jedoch in jedem Fall wesentlich geringer zu halten als die Ionentauscherkonzentration in der aus der EP 0 189 741 B1 bekannten PVC-Membranelektrode. Grundsätzlich ist es möglich, lediglich auf der Basis Epoxidharz samt Flexibilisator plus einer Aminverbindung als Härterkomponente eine chloridsensitive Elektrode herzustellen. Die zusätzliche Verwendung eines Ionentauschers ist dann notwendig, wenn eine ähnliche oder zum Teil bessere Selektivität wie bei den bekannten PVC-Membranelektroden erreicht werden soll.

In gewissen Grenzen kann mit der Härterkonzentration die Selektivität der Membranelektrode beeinflusst werden. Die Härterkonzentration kann allerdings nicht beliebig erhöht werden, da ansonsten eine Versprödung der Membran bzw. eine Ablösung vom Gehäuse bzw. Trägersubstrat auftritt. Es hat sich demnach als vorteilhaft erwiesen, Härterkonzentrationen einzusetzen, welche bis zu 150 % höher liegen als jene, die für den reinen Aushärtungsprozess nötig sind.

Bevorzugt wird als Ionentauscher eine aliphatische, quarternäre Ammoniumverbindung, vorzugsweise Methyltridodecylammoniumchlorid oder Methyltrioctylammoniumchlorid, eingesetzt.

Erfindungsgemäß ist beispielsweise vorgesehen, dass die Elektrodenmembran aus ca. 80 Gew.% Epoxidharz samt Flexibilisator, ca. 10 ± 2 Gew.% Härter und ca. 10 ± 3 Gew.% Methyltridodecylammoniumchlorid besteht.

In einer erfindungsgemäßen Ausführungsvariante besteht die Elektrodenmembran aus ca. 70 Gew.% Epoxidharz samt Flexibilisator, ca. 10 ± 2 Gew.% Härter und ca. 20 ± 3 Gew.% Methyltrioctylammoniumchlorid (enthalten z.B. in Aliquat® 336 der Fa. FLUKA, Buchs, Schweiz; Bestellnummer. 91042). Für beide Varianten kann beispielsweise das Epoxidharz CY 208 (modifiziertes Epoxidharz mit einem Gehalt von ≤ 50% Propylenglycoldiglycidyläther als Flexibilisator) sowie der Härter HY 951 von CIBA GEIGY verwendet werden.

Die Erfindung wird im folgenden anhand von Zeichnungen näher erläutert. Es zeigen in Diagrammen die
- Fig. 1: Änderungen der Selektivität in Abhängigkeit des Gehaltes an Ionentauscher, die
- Fig. 2: Änderungen der Steilheit der Kennlinie durch Anlagerung von Protein in Abhängigkeit von der Zeit bei herkömmlichen Elektrodenmembranen, die
- Fig. 3: Änderungen der Steilheit der Kennlinie in Abhängigkeit von der Zeit beim erfindungsgemäßen Sensor verglichen mit einem Sensor gemäß Stand der Technik, sowie die
- Fig.4: die Stabilität einer erfindungsgemäßen Chloridelektrode im kontinuierlichen Messbetrieb über 15 Wochen.

In Fig. 1 sind in einem Diagramm unterschiedliche Interferenten (Bicarbonat, Nitrat, Thiocyanat, Bromid, Azid und Salicylat) und deren Einfluss auf das Messergebnis (Signalzunahme in mmol/l) dargestellt. In den Klammern ist jeweils die zugesetzte Menge des Interferenten in mmol/l angeführt. Die Messung wurde einerseits mit herkömmlichen PVC-Membranelektroden (z.B. aus der EP 0 189 741 B1) durchgeführt, wobei unterschiedliche Konzentrationen des Ionentauschers IT (80 Gew.%, 70 Gew.% und 60 Gew.%) verwendet wurden und anderseits mit einer erfindungsgemäßen Elektrodenmembran (D-Version). Bereits bei einer Abnahme auf 60 Gew.% Ionentauscher zeigt sich eine signifikante Verschlechterung der Selektivität bei herkömmlichen PVC-Membranelektroden, während die D-Version für die meisten Interferenten ausgezeichnete Selektivitätsdaten zeigt.

In Fig. 2 ist auf der Abszisse die Dauer der Belastung herkömmlicher PVC-Elektrodenmembranen mit verdünntem Serum in Stunden und auf der Ordinate die Abnahme der Steilheit der Membranelektrode in % aufgetragen. Die unterste Kurve zeigt einen Sensor mit hoher Ionentauscherkonzentration (IT=80%) und rascher Abnahme der Steilheit, die oberste Kurve einen mit niedriger Ionentauscherkonzentration (IT=60%). Damit zeigt sich, dass die Verschmutzungsanfälligkeit bei niedrigen Ionentauscherkonzentrationen weit geringer ist.

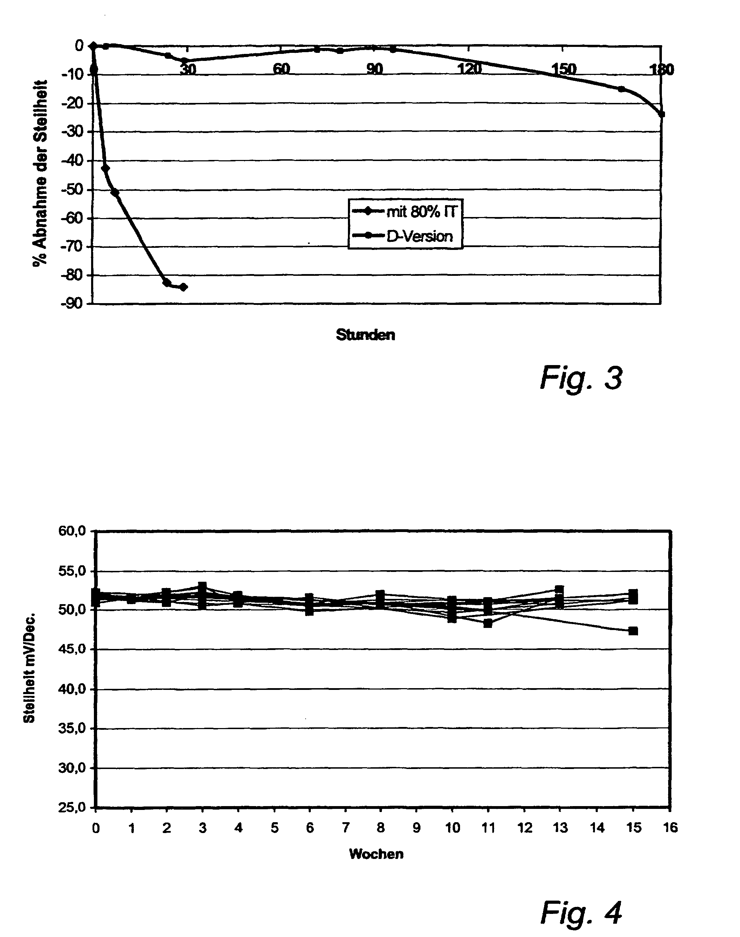

In Fig. 3 ist die prozentuelle Veränderung der Steilheit in % über der Dauer des Serumkontaktes in Stunden aufgetragen. Die Messkurve (D-Version) zeigt die wesentlich geringere Verschmutzungstendenz einer erfindungsgemäßen Elektrodenmembran im Vergleich zu einer herkömmlichen PVC-Elektrodenmembran (mit 80% IT).

In Fig. 4 wird die Stabilität erfindungsgemäßer, chloridsensitiver Elektrodenmembranen anhand der Steilheit der Elektrodenkennlinie (mV/Dec.) in Abhängigkeit der Zeit (Wochen) dargestellt. Innerhalb von 15 Wochen kann bei allen gemessenen Elektrodenmembranen eine große Stabilität der Steilheit der Kennlinie festgestellt werden, wobei die Messung bei 40° C und bei in Summe über 120 Stunden Serumkontakt durchgeführt wurde. Sowohl die hohe Messtemperatur als auch der Serumkontakt (Serum 1:9 mit Wasser verdünnt) stellen extreme Messbedingungen dar. Es hat sich überraschenderweise gezeigt, dass die Ablagerung von biologischen Materialien auf der Membran - d.h. die Verschmutzungstendenz der Membran - bei beispielsweise 1:9 verdünnten Serumproben wesentlich größer ist, als bei unverdünnten Proben. Die Elektrodenmembranen wurden während der 15-wöchigen Messzeit - unter Simulation eines normalen Messbetriebes - mehrmals mit einer Reinigungslösung von Proteinablagerungen gereinigt, was offensichtlich zu keinen mit einer Abnahme der Steilheit einhergehenden Änderungen in der Membranzusammensetzung geführt hat.

Bei der Auswahl des Ionentauschers für die erfindungsgemäße Elektrodenmembran ist auf die Verträglichkeit des Ionentauschers mit der Polymermatrix zu achten. Hierbei hat sich gezeigt, dass die Verwendung kürzerkettiger aliphatischer Ionentauscher diesbezüglich vorteilhafter sein kann als die Verwendung längerkettiger. Beispielsweise lassen sich von Aliquat® (im wesentlichen Methyltrioctylammoniumchlorid) 50 Gew.% und mehr in bestimmte Epoxidharze (z.B. CY 208 von CIBA GEIGY) einmischen, wobei allerdings die Neigung zur Verschmutzung der Membran ansteigt; bei Verwendung von Methyltridodecylammoniumchlorid lassen sich hingegen in diese Epoxidharze nur etwas mehr als 10 % einmischen.

Die erfindungsgemäße Elektrodenmembran erzielt in Serum- und Blutproben gute Messeigenschaften bei nur geringer Verschmutzungstendenz. Weiters ist eine hohe Selektivität auch im Vergleich mit herkömmlichen PVC-Membranelektroden (z.B. AT-B 380 741) gegeben, was aus der untenstehenden Tabelle ersichtlich ist.

**Tab.: 1**

| Interferent | Konzentration der Interferenten (mmol/l) | Signaländerung ATB 380741 (mmol/l) | Signaländerung Erfindung (mmol/l) |
|---|---|---|---|
| Bromid | 5 | 16 | 7 |
| Nitrat | 5 | 14 | 8 |
| Rhodanid | 1 | 22 | 6 |
| Salicylat | 5 | 2 | 3 |

Bei sehr hoher Probenbelastung ist jedoch fallweise eine Reinigung mit entsprechenden Reinigungsmitteln nötig. Es hat sich gezeigt, dass nach derartigen Reinigungsschritten eine vorübergehende Erhöhung der Empfindlichkeit der Elektrodenmembran auf Salicylat eintritt, welche störend sein kann. Dieses Problem kann erfindungsgemäß dadurch reduziert bzw. behoben werden, dass die der Probe zugewandte Seite der Elektrodenmembran mit einer Deckschicht überzogen ist, wobei bevorzugt Deckschichten aus modifiziertem Polyurethan Verwendung finden.

## Patentansprüche

1. Chloridsensitive Elektrodenmembran, welche eine Polymermatrix mit zumindest einer elektroaktiven Komponente aufweist, wobei die Polymermatrix ein Epoxidharz mit einer Aminverbindung als Härter enthält, **dadurch gekennzeichnet, dass** das Epoxidharz zumindest einen epoxidharzkompatiblen Flexibilisator aufweist, sowie dass der Anteil an Epoxidharz samt Flexibilisator an der Elektrodenmembran bei über 60 Gew.% und jener der elektroaktiven Komponente bei maximal 35 Gew.%, vorzugsweise bei maximal 30 Gew.%, liegt.

2. Chloridsensitive Elektrodenmembran nach Anspruch 1, **dadurch gekennzeichnet, dass** ein Überschuss an Aminverbindung vorgesehen ist, welcher die für den Aushärtungsprozess nötige Konzentration um maximal 150 % übersteigt.

3. Chloridsensitive Elektrodenmembran nach Anspruch 1 oder 2, **dadurch gekennzeichnet, dass** die elektroaktive Komponente zumindest zum Teil aus einem Ionentauscher besteht.

4. Chloridsensitive Elektrodenmembran nach Anspruch 3, **dadurch gekennzeichnet, dass** als Ionentauscher eine aliphatische, quarternäre Ammoniumverbindung, vorzugsweise Methyltridodecylammoniumchlorid oder Methyltrioctylammoniumchlorid, verwendet wird.

5. Chloridsensitive Elektrodenmembran nach einem der Ansprüche 1 bis 4, **dadurch gekennzeichnet, dass** das Epoxidharz ≤ 50% Propylenglycoldiglycidyläther als Flexibilisator aufweist.

6. Chloridsensitive Elektrodenmembran nach einem der Ansprüche 1 bis 4, **dadurch gekennzeichnet, dass** das Epoxidharz ≤ 50% Kresylglycidyläther als Flexibilisator aufweist.

7. Chloridsensitive Elektrodenmembran nach einem der Ansprüche 1 bis 6, **dadurch gekennzeichnet, dass** die Elektrodenmembran im Wesentlichen PVC - frei ist oder nur PVC - Anteile < 5 - 10 Gew.% aufweist.

8. Chloridsensitive Elektrodenmembran nach einem der Ansprüche 4 bis 7, **dadurch gekennzeichnet, dass** die Membran aus ca. 80 Gew.% Epoxidharz samt Flexibilisator, ca. 10 ± 2 Gew.% Härter und ca. 10 ± 3 Gew.% Methyltridodecylammoniumchlorid besteht.

9. Chloridsensitive Elektrodenmembran nach einem der Ansprüche 4 bis 7, **dadurch gekennzeichnet, dass** die Membran aus ca. 70 Gew.% Epoxidharz samt Flexibilisator, ca. 10 ± 2 Gew.% Härter und ca. 20 ± 3 Gew.% Methyltrioctylammoniumchlorid besteht.

10. Chloridsensitive Elektrodenmembran nach einem der Ansprüche 1 bis 9, **dadurch gekennzeichnet, dass** die der Probe zugewandte Seite der Elektrodenmembran mit einer Deckschicht überzogen ist.

11. Chloridsensitive Elektrodenmembran nach Anspruch 10, **dadurch gekennzeichnet, dass** die Deckschicht aus einem Polyurethan besteht.

## Claims

1. A chloride-sensitive electrode membrane comprising a polymer matrix with at least one electroactive component, said polymer matrix containing an epoxy resin with an amino compound as a curing agent, **wherein** the epoxy resin is provided with at least one epoxy resin compatible flexibilizer, and wherein the content of epoxy resin plus flexibilizer in the electrode membrane amounts to more than 60% by weight, while that of the electroactive component is not more than 35% by weight, and preferably not more than 30% by weight.

2. A chloride-sensitive electrode membrane according to claim 1, **wherein** a surplus of amino compound is provided which will exceed the concentration necessary for curing by 150% at most.

3. A chloride-sensitive electrode membrane according to claim 1 or 2, **wherein** the electroactive component is at least partially composed of an ion exchanger.

4. A chloride-sensitive electrode membrane according to claim 3, **wherein** an aliphatic quaternary ammonium compound, and preferably methyltridodecyl ammonium chloride or methyl-trioctyl ammonium chloride is used as ion exchanger.

5. A chloride-sensitive electrode membrane according to any of claims 1 to 4, **wherein** the epoxy resin is provided with ≤50% propylene glycoldiglycidyl ether as flexibilizer.

6. A chloride-sensitive electrode membrane according to any of claims 1 to 4, **wherein** the epoxy resin is provided with ≤50% cresyl glycidyl ether as flexibilizer.

7. A chloride-sensitive electrode membrane according to any of claims 1 to 6, **wherein** the membrane is essentially free from PVC or contains only a percentage of < 5 to 10 % by weight PVC.

8. A chloride-sensitive electrode membrane according to any of claims 4 to 7, **wherein** the membrane is composed of about 80% by weight epoxy resin plus flexibilizer, and about 10±2% by weight curing agent, and about 10±3% by weight methyltridodecyl ammonium chloride.

9. A chloride-sensitive electrode membrane according to any of claims 4 to 7, **wherein** the membrane is composed of about 70% by weight epoxy resin plus flexibilizer, and 10±2% by weight curing agent, and about 20±3% by weight methyltrioctyl ammonium chloride.

10. A chloride-sensitive electrode membrane according to any of claims 1 to 9, **wherein** the side of the electrode membrane in contact with the sample is coated with a cover film.

11. A chloride-sensitive electrode membrane according to claim 10, **wherein** the cover film consists of a polyurethane.

## Revendications

1. Membrane pour électrode sensible aux chlorures, présentant une matrice en polymère avec au moins un composant électroactif, la matrice en polymère contenant une résine époxy avec une combinaison amine en tant que durcissant, **caractérisé en ce que** la résine époxy présente au moins un flexibilisateur compatible avec la résine époxy, et la proportion de résine époxy avec le flexibilisateur, sur la membrane d'électrode, est d'une valeur supérieure à 60% en poids et celle du composant électroactif est au maximum de 35% en poids, de préférence au maximum de 30% en poids.

2. Membrane pour électrode sensible aux chlorures selon la revendication 1, **caractérisé en ce qu'**un excès de combinaison amine est prévu, qui dépasse d'un maximum de 150% la concentration nécessaire pour le processus de durcissement.

3. Membrane pour électrode sensible aux chlorures selon la revendication 1 ou 2, **caractérisé en ce que** le composant électroactif est formé au moins en partie d'un échangeur d'ions.

4. Membrane pour électrode sensible aux chlorures selon la revendication 3, **caractérisé en ce qu'**on utilise comme échangeur d'ions une combinaison ammonium quaternaire, aliphatique, de préférence du chlorure de méthyltridodécylammonium, ou bien du chlorure de méthyltrioctylammonium.

5. Membrane pour électrode sensible aux chlorures selon une des revendications 1 à 4, **caractérisé en ce que** la résine époxy présente, à titre de flexibilisateur, une teneur ≤ 50% en propylèneglycoldiglycidyléther.

6. Membrane pour électrode sensible aux chlorures selon une des revendications 1 à 4, **caractérisé en ce que** la résine époxy présente en tant que flexibilisateur une teneur ≤ 50% de crésylglycidyléther.

7. Membrane pour électrode sensible aux chlorures selon une des revendications 1 à 6, **caractérisé en ce que** la membrane d'électrode est pratiquement exempte de PVC, ou bien ne présente que des proportions en PVC < 5 à 10% en poids.

8. Membrane pour électrode sensible aux chlorures selon une des revendications 4 à 7, **caractérisé en ce que** la membrane est formée d'environ 80% en poids de résine époxy avec le flexibilisateur, d'environ 10 ± 2% en poids de durcisseur et d'environ 10 ± 3% en poids de chlorure de méthyltridodécylammonium.

9. Membrane pour électrode sensible aux chlorures selon une des revendications 4 à 7, **caractérisé en ce que** la membrane est formée d'environ 70% en poids de résine époxy avec le flexibilisateur, d'environ 10 ± 2% en poids de durcisseur et d'environ 20 ± 3% en poids de chlorure de méthyltridodécylammonium.

10. Membrane pour électrode sensible aux chlorures selon une des revendications 1 à 9, **caractérisé en ce que** la face, tournée vers l'échantillon, de la membrane d'électrode est revêtue d'une couche de couverture.

11. Membrane pour électrode sensible aux chlorures selon la revendication 10, **caractérisé en ce que** la couche de couverture est formée d'un polyuréthane.
